# EUROPEAN PATENT APPLICATION

(11) **EP 3 112 653 A1**
(43) Date of publication of application: **04.01.2017**
(21) Application number: 15380022.2
(22) Date of filing: 03.07.2015
(51) Int. Cl.: F02M 35/10, F02M 35/16, B60K 13/02

(54) **FLUID DUCT**

(71) Applicant: MANN+HUMMEL GmbH, 71638 Ludwigsburg (DE)
(72) Inventor: Olivan, Juan Jose, 50.008 Zaragoza (ES); Sánchez, Jorge, 50.010 Zaragoza (ES); Heras, Jaime Gracia, 50010 Zaragoza (ES); Lombardo, Juan Jose, 50019 Zaragoza (ES); Mudarra, Luis, 90.410 Zaragoza (ES)

(57) **Abstract**

The invention relates to a fluid duct (10), particularly an inlet air duct for a combustion engine in a vehicle, having a shell (12) enclosing an inner volume (30) and comprising at least one upper surface (14) and at least one side wall (16, 17), which upper surface (14) represents an upper surface (14) of the fluid duct (10) in its mounted state in an intended position. The side wall (16, 17) is configured to be selectively collapsible upon action of a force (34) applied to the upper surface (14) so that in a collapsed state of the shell (12) the upper surface (14) and the at least one collapsible side wall (16, 17) collapse below a predefined level thus reducing a height (28) of the shell (12).

## Description

### Technical Field

The invention relates to a fluid duct, in particular to an inlet air duct for a combustion engine in a vehicle.

### Prior Art

US 6,123,616 A discloses a shock energy absorbing air duct in a vehicle comprising an air conditioner for conditioning the air in the vehicle and an air duct for allowing air to flow in the vehicle. The air duct is formed by a flexible, tubular pipe using a non-metallic material at least on the outer surface, and disposed along the panel surface of the vehicle so as to absorb the energy of an external force owing to the plastic deformation of the air duct when the external force is applied to the vehicle body.

The pipe-like air duct is formed of hard aluminum foil. Concave and convex shapes give flexibility to the air duct. For the air duct, Kraft paper is wound on both surfaces of the aluminum foil. This air duct is disposed between an outer panel and an inner panel of vehicle body along the panels, laid to the rear seat of the vehicle, and connected to a blow-off port for the rear seat. In a collision of the vehicle, the air duct is subjected to plastic deformation, by which the shock energy caused by an external force is absorbed.

### Disclosure of the Invention

It is an object of the invention to provide a fluid duct, in particular for an inlet air duct for a combustion engine in a vehicle, which is easy to manufacture and which is particularly useful for pedestrian protection concepts of vehicles.

According to a first aspect of the invention the object is achieved by a fluid duct, having a shell enclosing an inner volume and comprising at least one upper surface and at least one side wall, which upper surface represents an upper surface of the fluid duct in its mounted state in an intended position, wherein the side wall is configured to be selectively collapsible upon action of a force applied to the upper surface.

The other claims, the description and the drawings describe advantageous embodiments of the invention.

A fluid duct, particularly an inlet air duct for a combustion engine in a vehicle, is proposed, having a shell enclosing an inner volume and comprising at least one upper surface and at least one side wall, which upper surface represents an upper surface of the fluid duct in its mounted state in an intended position. The at least one side wall is configured to be selectively collapsible upon action of a force applied to the upper surface so that in a collapsed state of the shell the upper surface and the at least one collapsible side wall collapse below a predefined level thus reducing a height of the shell.

A fluid duct, particularly an inlet air duct for a combustion engine in a vehicle, might be located in an engine compartment of the vehicle, where it is subject to forces in case of a hit or crash of the vehicle. Usually the fluid duct, especially if it is made from some plastic materials it may collapse partly upon exertion of a force, but side walls of the fluid duct might remain in its normal mounting position because of strength of the material. Particularly if the fluid duct is located in a pedestrian protection line this situation might pose a problem because pedestrians could be hurt additionally by such hard structures remaining in a crash. Thus it might be of great advantage if the fluid duct could collapse upon forces exerted and no rigid structures would remain violating the pedestrian protection line of the vehicle.

The inventive solution of a fluid duct exhibiting collapsible side walls upon forces exerted applied to an upper surface of the fluid duct solves this problem, because the shell as the main body of the fluid duct collapses as a whole so that in a collapsed state of the shell the upper surface and the at least one collapsible side wall collapse below a predefined level thus reducing a height of the shell. The rigid structures of the shell collapse in itself. Thus the total envelope of the fluid duct is reduced because the overall height of the fluid duct is reduced and there are no single side walls remaining in the direction of the pedestrian protection line.

According to the inventive fluid duct the upper surface is pressed in the direction where a force is applied. The upper surface is thus moved in direction of an opposing lower surface of the shell where the fluid duct is constructed of. The side walls of the shell exhibit a weaker point, which could be a hinge, or some weakened material due to lower thickness, or e.g. a bellows, so that the side wall collapses in itself and moves partly to an outer side of the shell or an inner side, but it does not remain in the shape it had before exerting the force. So the overall height of the fluid duct is decreased by a flattening process which offers the possibility that the fluid duct as a whole stays behind a pedestrian protection line. This offers advantageous design possibilities in mounting such a fluid duct under the hood of a vehicle in an engine compartment.

Thus according to a favorable embodiment the at least one side wall may comprise a hinge, supporting collapsibility of the side wall. The hinge enables the side wall to fold upon exertion of the force on the upper surface, because the upper surface transmits a component of the force to the side wall and as the hinge is the weakest element in the chain it allows the side wall to bend in an outer or inner direction with regard to the shell, according to construction of the hinge.

In an alternative favorable embodiment a thickness of the at least one side wall may be reduced compared to a medium thickness of the shell, supporting collapsibility of the side wall. This also enables the side wall to bend if a force component in the direction of the side wall is exerted. Then for stronger forces the side wall may collapse totally so that the shell will be flattened due to the force exerted on the upper surface and the overall total height of the shell will be reduced.

The material of the shell may be a polypropylene (PP), because it is a typical low cost material for fluid ducts, but there are no specific requirements according to the inventive solution. A medium thickness of the shell may be in the range of millimeters, preferably below 10 mm, e.g. with a value between 1 to 4 mm.

In a further advantageous embodiment the at least one side wall may comprise a bellows-like structure, supporting collapsibility of the side wall. A bellows is a favorable possibility to install a weakened element in the side wall as it is constructed to bend easily. So the side wall will bend if a force component is exerted in the direction of the side wall and the side wall thus collapses. This is a reversible phenomenon because if the force is reduced again the side wall may re-establish its former shape and position due to the bellows-like structure.

According to a favorable embodiment the side wall may collapse towards an outer side or towards an inner side of the shell upon action of the force applied to the upper surface. The direction of the collapse of the side wall depends on the construction of the hinge and also on the shape of the shell concerning the joining of the upper surface as well as the lower surface to the side walls. If the side walls collapse to the outer side the remaining cross section of the shell will be larger than in the case of collapsing to the inner side. Yet if collapsing to the inner side the side walls may serve as a spacer element preventing the cross section of the shell to be minimized thus still ensuring an open channel for the fluid.

According to an advantageous embodiment the fluid duct may comprise at least one spacer element inside the shell preventing the shell to collapse over a full width of the fluid duct in a collapsed state of the shell. The spacer elements may avoid a full collapse of the shell upon exertion of a force to the upper surface of the shell. Thus a flow of the fluid through the shell is still granted.

Due to a favorable embodiment the spacer element may be arranged at at least one inner side of the shell. So this spacer element will be in contact with the opposing side of the shell if the force is exerted onto the shell and the upper surface is moved against the opposing surface. Thus an open cross section of the shell is still guaranteed.

In a further advantageous embodiment two opposing spacer elements may be arranged at opposing inner sides of the shell. By this way the two spacer elements may contact each other if some force is exerted on the upper surface of the shell and prevent the open cross section of the shell to be closed. Contrarily to the situation with a single spacer element the two spacer elements could lower in height whereas still maintaining the same distance between the upper surface and the lower surface of the shell.

Another favorable embodiment could exhibit the spacer element being a body located inside the shell, preventing the shell to collapse over the full width in a state where force is exerted on the shell. Such a body could made of hard foam. Also such a body could avoid the shell from collapsing during normal fluid flow operation, but could collapse in the case of a collision and therefore exertion of a force on the upper surface of the shell. Such a body could also be of advantage if the material of the shell, normally some plastic material, weakens due to high temperature occurring in the surrounding engine compartment as in summer. Thus the body still keeps the cross section of the shell open.

In a further advantageous embodiment the spacer element could be a rib located inside the shell, preventing the shell to collapse over the full width in a state where force is exerted to the shell. A rib would avoid a full collapse, because it protrudes from the normal surface and keeps the opposing surface at a certain distance if the surface approaches due to some force driving the opposing surface in the direction of the rib. The rib could be dimensioned according to the pedestrian protection line requirements as well as the pressure drop requirements of the fluid flow.

Advantageously the shell may increase its width transversal to the direction of force in a state force is exerted to the shell. Particularly if the side walls collapse to an outer side of the shell the width of the shell will increase, thus keeping a cross section open for the fluid flow. By this way the fluid flow is still granted even under collapse conditions upon exertion of the force towards the upper surface.

Due to an advantageous embodiment the shell may absorb shock energy by elastic and/or plastic deformation of the shell. This may result in an additional advantage of the inventive solution because it offers the possibility that the energy from a crash may be absorbed and not transferred to some other component in the vehicle. This phenomenon enhances the crash safety conditions of a vehicle exhibiting a further advantage for applying a fluid duct according to the invention, additionally to ensuring pedestrian protection line requirements.

In a favorable embodiment the shell may have a rectangular-shaped cross section. Such a constructive element is well suited for packaging requirements under the hood of a vehicle, particularly in an engine compartment, where space is always very limited. Rectangular-shaped ducts can favorably be mounted even in flat spaces between other components. Also in the interior of a vehicle such a rectangular-shaped fluid duct could favorably be accommodated due to packaging requirements.

In an advantageous embodiment the shell may be formed by a blow molding profile. Blow molding is a very flexible and efficient process for manufacturing fluid ducts, particularly for an inlet air duct for a combustion engine in a vehicle. The requirements for side walls according to the inventive solution for weakening of the structure in order to enable the collapsing effect could favorably be realized in such a blow molding process. Thus this manufacturing process could be very well suited for manufacturing the inventive fluid duct.

In a favorable embodiment the shell could be an injection molded profile ensuring all the features according to the inventive solution. Advantageously the shell could be a combination of a blow molding profile and an injection molding profile ensuring all the features according to the inventive solution.

Thus in an advantageous embodiment the shell could be a blow molded body ensuring all the features according to the inventive solution, where at least one side wall is configured to be selectively collapsible upon action of a force applied to the upper surface so that in a collapsed state of the shell the upper surface and the at least one collapsible side wall collapse below a predefined level thus reducing a height of the shell.

In a favorable embodiment the shell could be an injection molded body ensuring all the features according to the inventive solution. Advantageously the shell could be a combination of a blow molding body and an injection molding body ensuring all the features according to the inventive solution.

### Brief Description of the Drawings

The present invention together with the above-mentioned and other objects and advantages may best be understood from the following detailed description of the embodiments, but not restricted to the embodiments, wherein is shown in:
- Figure 1: in a cut view an example embodiment of a fluid duct with a rectangular-shaped cross section according to the invention:
- Figure 2: in a cut view the deformation of the fluid duct according to Figure 1, if a force is applied to the upper surface of the fluid duct;
- Figure 3: in a cut view a further embodiment of a fluid duct with a spacer inside the fluid duct to prevent a collapse if a force is applied to the upper surface of the fluid duct; and
- Figure 4: in a cut view a further example embodiment of a fluid duct with a bellows-like structure at both side walls as a hinge according to the invention;

### Detailed Description of the Drawings

In the drawings, like elements are referred to with equal reference numerals. The drawings are merely schematic representations, not intended to portray specific parameters of the invention. Moreover, the drawings are intended to depict only typical embodiments of the invention and therefore should not be considered as limiting the scope of the invention.

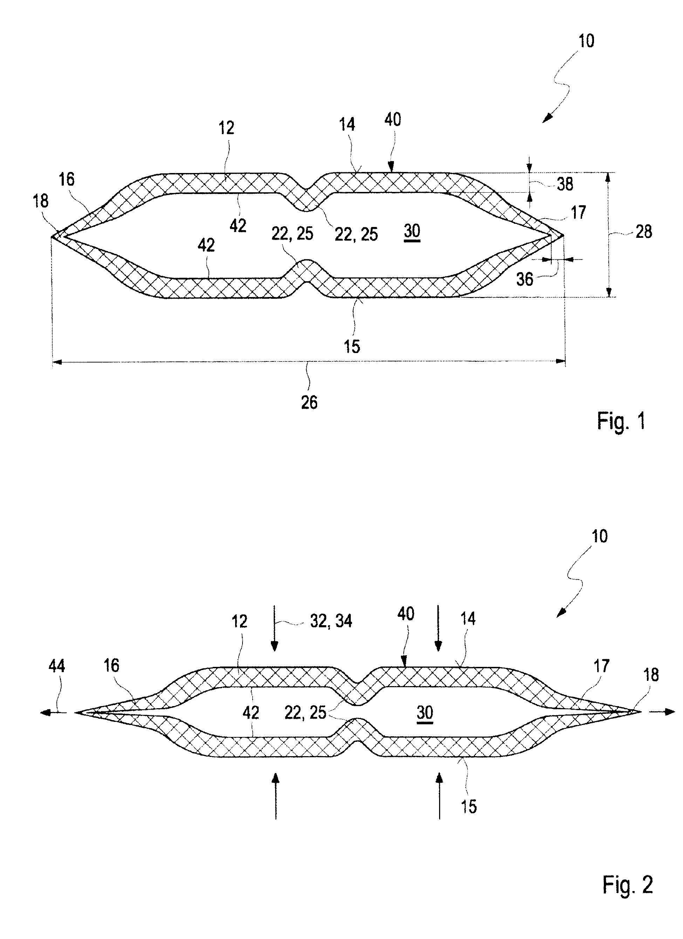

Figure 1 depicts a cut view an example embodiment of a fluid duct 10 with a cross section in a generally rectangular-shaped form according to the invention. The fluid duct 10 may be particularly intended for an inlet air duct for a combustion engine in a vehicle. The fluid duct 10 has a shell 12 enclosing an inner volume 30 and comprises an upper surface 14, a lower surface 15 and two side walls 16, 17. The upper surface 14 represents an upper surface of the fluid duct 10 in its mounted state in an intended position. At least one side wall 16, 17, preferably both side walls 16, 17 are configured to be selectively collapsible upon action of a force 34 applied to the upper surface 14, so that in a collapsed state of the shell 12 the upper surface 14 and the at least one collapsible side walls 16, 17 collapse below a predefined level, thus reducing a height 28 of the shell 12. The state with the force 34 exerted on the fluid duct 10 generating collapsed side walls 16, 17 is shown in Figure 2.

During operation of the fluid duct 10, the fluid is carried through the inner volume 30 of the fluid duct 10. The fluid duct 10 exhibits a total width 26 and a height 28 in a normal state without a force 34 applied to the upper surface 14. The height 28 is significantly lower than the width 26, thus giving a rectangular shape to the shell 12. The side walls 16, 17 are collapsible by ways of, for instance, a hinge 18 integrated into the side walls 16, 17.

The side walls 16, 17 of the shell 12 comprise a hinge 18, supporting collapsibility of the side wall 16. The hinge 18 enables the side wall 16 to fold upon exertion of the force 34 on the upper surface 14, because the upper surface 14 transmits a component of the force 34 to the side wall 16 and as the hinge 18 is the weakest element in the chain it allows the side wall 16 to bend in an outer direction or an inner direction with regard to the shell 12, according to construction of the hinge 18.

A medium thickness 38 of the shell 12 is in the range of millimeters, preferably below 10 mm, e.g. a value between 1 to 4 mm. In particular, the fluid duct 10 may be made of polypropylene (PP). A thickness 36 of a side wall 16 of the shell 12, at the location of the hinge 18, may be significantly lower than the medium thickness 38 of the shell 12.

In the embodiment shown in Figures 1 and 2, the hinges 18 are formed by a reduced thickness 32 of the side walls 16, 17 compared to a medium thickness 38 of the shell 12, thus enabling the side walls 16, 17 to collapse upon exertion of the force 34 to the upper surface. The hinges 18 in the side walls 16, 17 of the shell 12 point towards the outer side 40 of the shell 12 thus being able to collapse towards the outer side 40 if force 34 is exerted on the upper surface 14.

The fluid duct 10 comprises two spacer elements 22 inside the shell 12 preventing the shell 12 to collapse over a full width 26 of the fluid duct in a collapsed state of the shell 12 and blocking the cross section 30 for the fluid flow. The two opposing spacer elements 22 are arranged at opposing inner sides 42 of the shell 12. In the example embodiment shown, the spacer element 22 is a rib 25 located inside the shell 12. The ribs 25 prevent a full collapse of the shell 12 upon exertion of a force 34 to the upper surface 14 of the shell. Thus a minimum flow of the fluid through the cross section 30 of shell 12 is still granted.

The generally rectangular cross section 30 of shell 12, as shown in Figure 1, is very convenient for accommodation reasons and packaging requirements in vehicles. The shell 12 may be manufactured as a blow molded body, formed by a blow molding profile, which is a very flexible and efficient process for manufacturing such fluid ducts.

Figure 2 shows in a cut view the deformation of the fluid duct 10 according to Figure 1, when a force 34 is applied in a direction 32 to the upper surface 14 of the fluid duct 10. The side walls 16, 17 are collapsing at the hinges 18, and the hinges 18 move towards an outer side 40 of the shell 12. The outer points of the hinges 18 move towards the outer side 40 of the shell 12 in a direction 44. Thus the shell 12 increases its width 26 transversal to the direction 32 of force 34 if a state force 34 is exerted to the shell. Alternatively the side walls 16 could also collapse towards an inner side 42.

Additionally, the shell 12 can also absorb shock energy elastic and/or by plastic deformation of the shell 12.The energy needed for elastic and/or plastic deformation of the shell 12 is reducing the effects of the shock energy exerted by a crash of the vehicle or other impact on the fluid duct 10.

In the embodiment shown, the ribs 25 have the same or a similar thickness as the overall shell thickness in this region, so that a recess is formed at the outside of the shell 12 at the positions of the ribs 25 at the inside of the shell 12. However, the ribs 25 may be thicker so that no recess is formed at the outside of the shell 12. Further, the hinges 18 of the side walls 16, 17 may be arranged in a way that one or both hinges 18 move inside instead of outside. In such a case the hinge 18 or hinges 18 may provide a spacer element 22 inside the shell 12 thus preventing a total collapse of the shell 12 on action of a force 34.

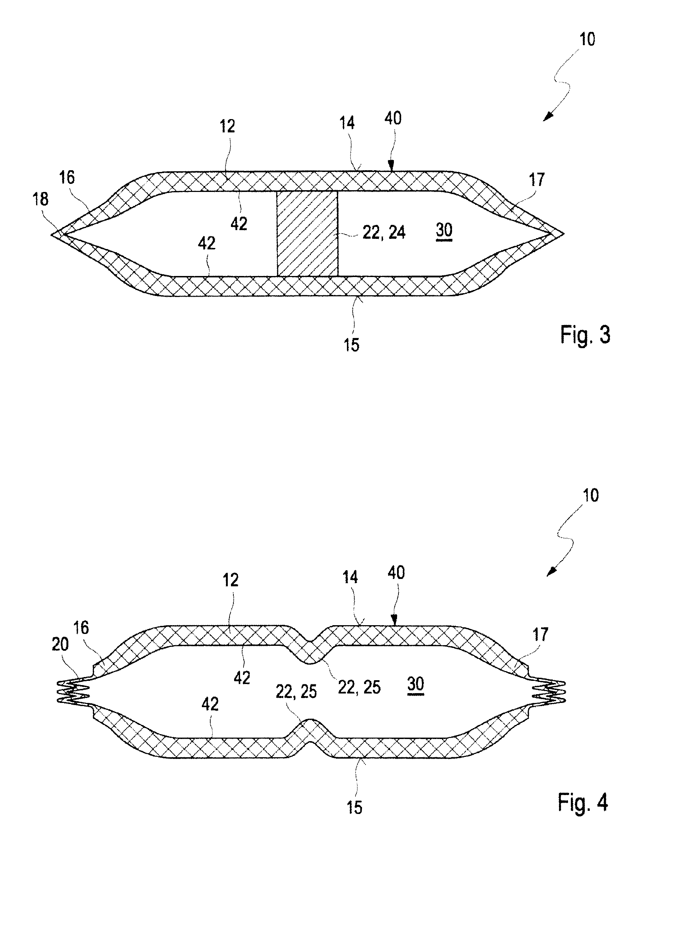

Figure 3 illustrates a further embodiment of a fluid duct 10 in a cut view with a spacer element 22 formed as a body 24, in this example as a rectangular body, inside the fluid duct 10 to prevent a collapse when a force 34 is applied to the upper surface 14 of the fluid duct 10, e.g. in the direction 32, as shown in Figure 2..

The spacer element 22 in Figure 3 is a body 24 located inside the shell 12, preventing the shell 12 to collapse over the full width 26 in a state where force 34 is exerted on the shell 12. Such a body 24 could be made of hard foam. Favorably, such a body 24 could avoid the shell 12 from collapsing during normal fluid flow operation, but could collapse in the case of a collision and therefore exertion of a force 34 on the upper surface 14 of the shell 12. Such a body 24 could also be of advantage if the material of the shell 12, normally a plastic material, should weaken due to high temperature during operation of the fluid duct 10, e.g. occurring in the surrounding engine compartment in summer when the fluid duct 10 is arranged in a vehicle. Thus the body 24 still keeps the cross section of the shell 12 open.

Figure 4 shows in a cut view a further example embodiment of a fluid duct 10 with a bellows-like structure 20 at both side walls as a hinge according to the invention. Here, one or both of the side walls 16, 17 comprise a bellows-like structure 20, supporting collapsibility of the side walls 16, 17. This is a further possibility additionally to a weakening of the material of the side walls 16, 17 to provide the capability for the side walls 16, 17 to collapse in case a force 34 is exerted on the upper surface 14. A bellows 20 is a favorable possibility to install a weakened element in the side wall 16, 17 as it is constructed to bend easily. The bellows 20 may be made of the same material as the remaining part of the shell 12, but with a lower thickness of the side wall 16, 17 and folded so that it can bend easily if some force is exerted on the bellows 20 or on the upper surface 14 of the shell 12. So the side wall 16 will bend if a force component is exerted in the direction of the side wall 16, 17 and the side wall 16, 17 thus collapses. This is a reversible phenomenon because if the force 34 is reduced again, the side wall 16, 17 may re-establish its former shape and position due to the bellows-like structure 20.

## Claims

1. A fluid duct (10), particularly an inlet air duct for a combustion engine in a vehicle, having a shell (12) enclosing an inner volume (30) and comprising at least one upper surface (14) and at least one side wall (16, 17), which upper surface (14) represents an upper surface (14) of the fluid duct (10) in its mounted state in an intended position, wherein the side wall (16, 17) is configured to be selectively collapsible upon action of a force (34) applied to the upper surface (14) so that in a collapsed state of the shell (12) the upper surface (14) and the at least one collapsible side wall (16, 17) collapse below a predefined level thus reducing a height (28) of the shell (12).

2. The fluid duct according to claim 1, wherein the at least one side wall (16, 17) comprises a hinge (18), supporting collapsibility of the side wall (16).

3. The fluid duct according to claim 1 or 2, wherein a thickness (32) of the at least one side wall (16, 17) is reduced compared to a medium thickness (34) of the shell (12), supporting collapsibility of the side wall (16, 17).

4. The fluid duct according to any one of the preceding claims, wherein the at least one side wall (16, 17) comprises a bellows-like structure (20), supporting collapsibility of the side wall (16, 17).

5. The fluid duct according to any one of the preceding claims, wherein the side wall (16, 17) is collapsing towards an outer side (40) or towards an inner side (42) of the shell (12) upon action of the force (34) applied to the upper surface (14).

6. The fluid duct according to any one of the preceding claims, wherein the fluid duct comprises at least one spacer element (22) inside the shell (12) preventing the shell (12) to collapse over a full width (26) of the fluid duct in a collapsed state of the shell (12).

7. The fluid duct according to claim 6, wherein the spacer element (22) is arranged at at least one inner side (42) of the shell (12).

8. The fluid duct according to claim 7, wherein two opposing spacer elements (22) are arranged at opposing inner sides (42) of the shell (12).

9. The fluid duct according to anyone of the claims 6 to 8, wherein the spacer element (22) is a body (24) located inside the shell (12), preventing the shell (12) to collapse over the full width (26) in a state where force (34) is exerted on the shell (12).

10. The fluid duct according to anyone of the claims 6 to 9, wherein the spacer element (22) is a rib (25) located inside the shell (12), preventing the shell (12) to collapse over the full width (26) in a state where force (34) is exerted to the shell.

11. The fluid duct according to any one of the preceding claims, wherein the shell (12) increases its width (26) transversal to the direction (32) of force (34) in a state force (34) is exerted to the shell.

12. The fluid duct according to any one of the preceding claims, wherein the shell (12) absorbs shock energy by elastic and/or plastic deformation of the shell (12).

13. The fluid duct according to any one of the preceding claims, wherein the shell (12) has a rectangular-shaped cross section (30).

14. The fluid duct according to any one of the preceding claims, wherein the shell (12) is formed by a blow molding profile, or an injection molding profile or a combination of a blow molding profile and an injection molding profile.

15. The fluid duct according to any one of the preceding claims, wherein the shell (12) is a blow molded body or injection molding body or a combination of a blow molding body and an injection molding body.
